# EUROPEAN PATENT APPLICATION

(11) **EP 2 448 194 A1**
(43) Date of publication of application: **02.05.2012**
(21) Application number: 11186368.4
(22) Date of filing: 24.10.2011
(51) Int. Cl.: H04L 12/56, H04W 28/10

(54) **Method and Arrangement for Dynamic Control of Air Interface Througput**

(30) Priority: 28.10.2010 US 914161
(71) Applicant: Telefonaktiebolaget LM Ericsson (publ), 164 83 Stockholm (SE)
(72) Inventor: Turányi, Zoltán Richárd, 2000 SZENTENDRE (HU); Pongrácz, Gergely, 1221 Budapest (HU); Rácz, Sándor, 2700 CEGLÉD (HU); Szilvester, Nádas, 1192 Budapest (HU)
(74) Representative: Ström & Gulliksson AB

(57) **Abstract**

Methods and network nodes for dynamically controlling throughput over an air interface between a mobile terminal and a radio telecommunication system, are disclosed. A Gateway GPRS Service Node (GGSN) (12) receives a plurality of traffic flows for the mobile terminal and uses a Deep Packet Inspection (DPI) module (11) to determine (41) a target delay class for each traffic flow. The GGSN signals (23) the target delay class of each traffic flow to a Radio Network Controller (RNC) (16) utilizing per-packet marking within a single radio access bearer (RAB). The RNC defines (24) a separate virtual queue for each delay class on a per-RAB basis, and instructs (25) a Node B (17) serving the mobile terminal to do the same. The Node B (17) services the queues according to packet transmission delays associated with each queue. A flow control mechanism sets a packet queue length for each queue to optimize transmission performance.

## Description

### TECHNICAL FIELD

The present disclosure relates in general to radio telecommunication systems. In more particular, the present disclosure is directed to a method and an arrangement for dynamically controlling throughput over the air interface between a mobile terminal and a radio telecommunication network.

### BACKGROUND

In data communication between a sender and a receiver, the pace of data transmission has to be managed in order to prevent a fast sender from outrunning a slow receiver. Flow control (FC) provides a mechanism for the receiver to control the transmission rate.

Flow control is important because a sending computer may transmit information at a faster rate than the destination computer is able to receive and process said information. In case a receiving computer has a heavy traffic load in comparison to a sending computer, or in case the receiving computer has less processing power than the sending computer, flow control may be valuable.

In FC there are generally two packet queues, one in down-link and another in uplink. In High-Speed Downlink Packet Access (HSDPA), the length of the Packet Queue (PQ) in a Node-B is handled by a HSDPA FC.

The FC contends for two somewhat contradictory goals, of which a first one is to keep the PQ length short to achieve low delays or low latencies, which is especially valuable for time-sensitive data traffic. A second goal is to keep the PQ length long enough to avoid under-utilization of the available radio bearer.

The existing HSDPA FC algorithm tries to fulfill both requirements by dynamically setting a shaping rate of the packet flow in the Radio Network Controller (RNC). The shaping rate is set relative to a target delay in the following way:
- If the estimated delay, or PQ length, is lower than the target delay, then HSDPA FC algorithm increases the bit rate of the shaper; and
- If the estimated PQ length is higher than the target delay, then the HSDPA FC algorithm decreases the bit rate of the shaper.

The performance of the Uu interface between the mobile terminal and the Node B depends highly on the target delay selected by the HSDPA FC algorithm.

A drawback of the existing HSDPA FC algorithm is that there is no target delay that is optimal for all types of traffic. Delay-sensitive traffic, for example, online gaming traffic requires a very small target delay, whereas traffic that is highly dependent on the data throughput, for example, downloading of a large file, is less delay-sensitive and should use a higher target delay to avoid underutilization of the available radio resource.

The existing HSDPA FC algorithm adjusts the bit rate of the shaper to match the target delay set by the operator. However, the HSDPA FC is in no position to change the target delay set by the operator.

When a user utilizes services of both delay types, preference is usually given to the delay-sensitive traffic, the reason being that it is acceptable if the download speed drops, for example 20 percent, whereas delay of online gaming traffic is far less tolerable to increases in delay sensitivity.

In an attempt to adjust the target delay according to the data to be communicated, Deep Packet Inspection (DPI) is applied in a core network node such as a Gateway General Packet Radio Service Support Node (GGSN) to identify which flows require a delay-sensitive target delay and which flows require a throughput-oriented delay. Multiple bearers may then be set up with different target delays, and traffic flows can be categorized into those bearers depending on the target delay requirement of each flow. This attempt, however, has some disadvantages.

The main disadvantage is that it requires the setup of additional bearers in addition to the default bearer, or throughput is degraded even if Best Effort traffic is present in the single bearer cases.

Setting up additional bearers brings additional disadvantages. Firstly, it may be possible to set up additional bearers only for certain users, depending on configuration, or in certain network situations. For example, it may not possible to create new bearers during periods of high traffic load. Secondly, the signaling required for bearer setup and release may put extra, unwanted load on the communication system. Thirdly, the latency resulting from the bearer setup and release process, limits how quickly the various target delay settings may be installed.

There is hence a need to overcome said limitations and drawbacks of prior art disclosures.

Therefore, it would be advantageous to have a system and method for dynamically controlling throughput over the air interface, which achieves the same improvement in the performance of the Uu interface between the mobile terminal and the Node B without being affected by the drawbacks of above.

### SUMMARY

An object of the present disclosure is to provide dynamically controlling of a throughput over the air interface between a mobile terminal and a base station without the need to use additional bearers.

The present disclosure enables dynamically selecting of a target delay according to the type of service being utilized.

According to one aspect of this disclosure, a core network node for dynamically controlling throughput over an air interface between a mobile terminal and a radio telecommunication system, is disclosed. The radio telecommunication system comprises a radio access network and a core network. The core network node comprises means for receiving a plurality of traffic flows for the mobile terminal and means for obtaining from a packet inspection module, a target delay class for each traffic flow for the mobile terminal. The core network node also comprises communication means for signaling the target delay class of each traffic flow to a Radio Network Controller, RNC, in the radio access network utilizing per-packet marking within a single Radio Access Bearer, RAB.

The core network node may be a Gateway, General Packet Radio Service, GPRS, Serving Node, GGSN, and the packet inspection module may be a Deep Packet Inspection, DPI, module co-located with said core network node.

The communication means of the core network node may comprise means for indicating a delay class in a header field of the packets in each traffic flow, wherein the header field is selected from a group consisting of:
- a Differentiated Service Code Point, DSCP, field;
- an Internet Protocol version 6, IPv6, field;
- a new shim header inserted before each packet;
- a newly defined GPRS, Tunneling Protocol, GTP, extension field;
- an overloaded existing GTP field; and
- any other unused field of the packet header.

According to another aspect of this disclosure a computer-controlled method in a core network node of dynamically controlling throughput over an air interface between a mobile terminal and a radio telecommunication system, is disclosed. The radio telecommunication system comprises a radio access network and a core network. The method comprises receiving a plurality of traffic flows for the mobile terminal, and obtaining a target delay class for each traffic flow for the mobile terminal. The method also comprises signaling the target delay class of each traffic flow to a Radio Network Controller, RNC, utilizing per-packet marking within a single RAB

The means for obtaining a target delay class for each traffic flow, of the access network node, may comprise a DPI module co-located with the access network node.

The access network node may be a RNC, wherein the RNC instructs a Node B serving the mobile terminal to set up a separate, virtual queue in the Node B for each delay class on a per-RAB basis.

The RNC instructing the Node B may comprise sending an instruction to the Node B in a new Node B Application Part message.

The RNC instructing the Node B may comprise setting up virtual bearer parameters in the Node B in advance for different Logical Channel IDs; and setting a different Logical Channel ID for each delay class, whereupon the Node B sets up the required queues on demand.

The RNC and Node B may identify packets belonging to separate queues utilizing the Logical Channel IDs.

A flow control mechanism in the Node B may set a packet queue length for each queue to optimize transmission performance.

According to yet another aspect of this disclosure, a computer-controlled method in an access network node of dynamically controlling throughput over an air interface between a mobile terminal and a radio telecommunication system, is disclosed. The radio telecommunication system comprises a radio access network and a core network. The method comprises obtaining a target delay class for each of a plurality of traffic flows for the mobile terminal, and defining a separate, virtual queue for each delay class on a per-RAB basis. The method also comprises receiving from the core network, the plurality of traffic flows, and identifying packets in the flows belonging to separate queues utilizing Logical Channel IDs for each delay class. In addition, the method comprises servicing the queues in accordance with transmission delays associated with each delay class.

The obtaining a target delay class for each of a plurality of traffic flows in the computer-controlled method may comprise obtaining from performing DPI within the access network node indicating of a delay class by utilizing a node-internal encapsulation format.

### BRIEF DESCRIPTION OF DRAWINGS

These and other aspects, features and advantages of which this disclosure is capable of, will be apparent and elucidated from the following description of embodiments of this disclosure, reference being made to the accompanying drawings, in which
Fig. 1 schematically presents a telecommunication system related to embodiments of the present disclosure;
Fig. 2 presents fields of a control frame according to some embodiment of the present disclosure;
Figs. 3-5 are flowcharts of methods of embodiments of the present disclosure; and
Fig. 6 schematically illustrates a block diagram of some embodiments of the present disclosure.

### ABBREVIATIONS

- DPI: Deep Packet Inspection
- DSCP: Differentiated Service Code Point
- FC: Flow Control
- GGSN: Gateway GPRS Support Node
- GPRS: General Packet Radio Service
- GTP: GPRS Tunneling Protocol
- HSDPA: High Speed Downlink Packet Access
- IPv6: Internet Protocol version 6
- PQ: Packet Queue
- RNC: Radio Network Controller
- SGSN: Serving GPRS Support Node

### DETAILED DESCRIPTION

In order to dynamically select a target delay according to the type of service being utilized, a controlling node must first identify the type of service and its associated flow requirements. This may be done by defining categories of services, i.e. delay-sensitive flow service, for which the data requires a low latency, or throughput-oriented flow service. Then, using Deep Packet Inspection (DPI) functionality in a core network node, the user traffic may be analyzed and classified into categories of services as above.

After traffic-identification, the controlling DPI node knows whether the user has delay-sensitive traffic or not, and signals to an RNC or an HSDPA FC entity in the Node B using per-packet marking within a single bearer. The RNC and the Node B keep multiple queues per bearer, which queues may be virtual, and selectively put the various marked packet flows into these queues, depending on the target delay requirement. Flow control is made aware of the separate queues and it can differentiate these queues. Packet scheduling between the different queues is applied in a way to implement different effective target delays for the various virtual queues.

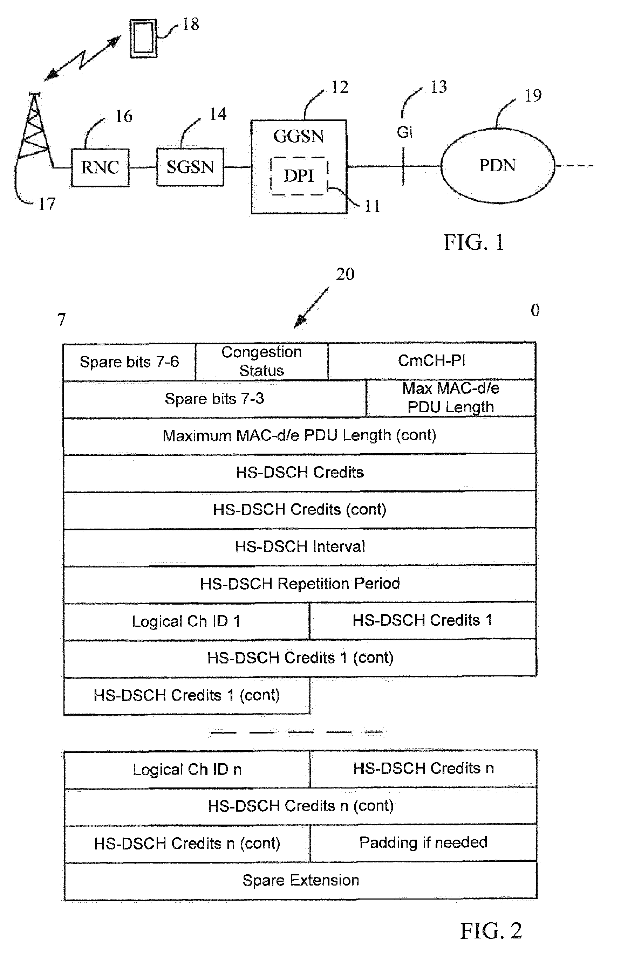

Fig. 1 schematically presents a telecommunication system related to embodiments of the present disclosure in which a DPI module 11 has been implemented in accordance with some teachings of the present disclosure. It should be clarified that the DPI module may be implemented, for example, either in the Gateway, General Packet Radio Service (GPRS), Support Node (GGSN) 12 or in a separate entity on the Gi interface 13, which entity is not shown in Fig. 1.

Having the DPI module in the GGSN may be preferred since the required General Packet Radio Service (GPRS) Tunneling Protocol (GTP)-control protocol is already part of the GGSN. The GTP-control protocol may be used within the GPRS core network for signaling between the GGSN 12 and Serving GPRS Support Nodes (SGSNs) 14.

This allows each SGSN to activate a session on a user's behalf, corresponding to user initiated PDP context activation, to deactivate the same session, to adjust quality of service parameters, or to update a session for a subscriber who has just arrived from another SGSN.

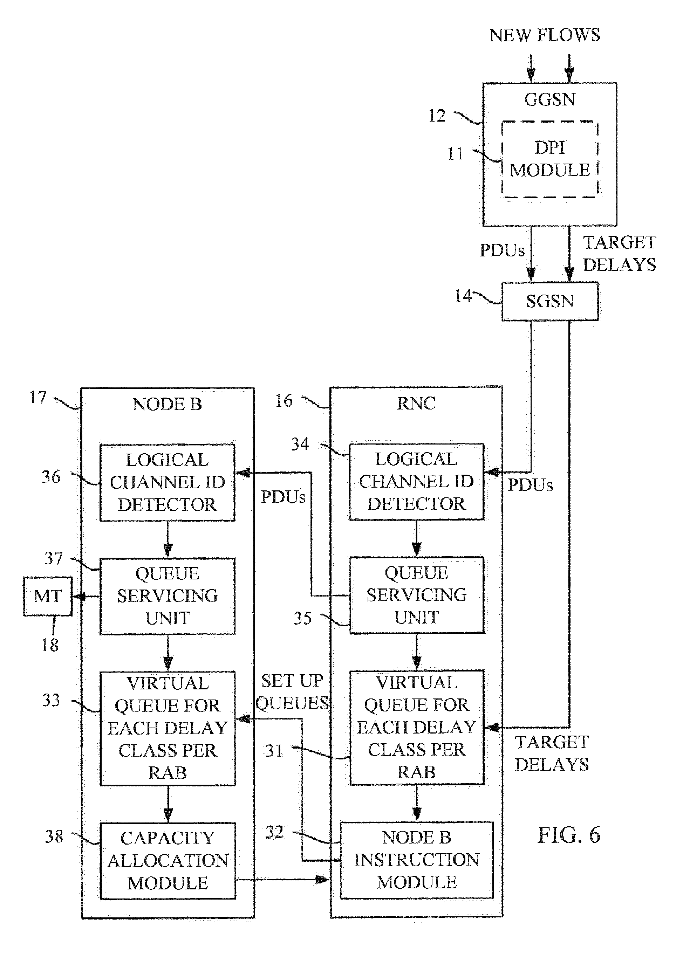

The DPI module communicates with a radio access network such as the Universal Terrestrial Radio Access Network, which comprises a Radio Network Controller (RNC) 16 and a Node B 17 for communicating with the Mobile Terminal (MT) 18, as shown in Fig. 6.

The DPI module 11 categorizes data traffic, and more specifically IP micro-flows, into one of two or more operator-defined delay classes, each having an assigned target delay. An IP micro-flow may be defined for example by a unique combination of source and destination IP addresses and port numbers along with the transport protocol value, which combination is called the "five-tuple".

Although this is a common way to define flows, the invention is not limited to this combination, and may utilize other combinations of header fields to define traffic flows. There is no limit on how many delay classes the operator may define, but a likely real-world number may be in the range of two to five delay classes.

The DPI module marks each packet according to the delay class of its IP micro-flow. Examples of ways by which the packets may be marked comprise:
- (1): Utilize the Differentiated Service Code Point (DSCP) field of a data packet;
- (2): Utilize the IPv6 flow label;
- (3): Utilize any unused field of the IP header;
- (4): Insert a new shim header before the IP packet to indicate the traffic class;
- (5): Utilize a newly defined GTP extension field, or overload an existing GTP field, such as the Tunnel Endpoint Identifier, and
- (6): Utilize a node-internal encapsulation format if the DPI module is co-located with the RNC 16.

It is clarified that Differentiated Service denotes a method for guaranteeing, or at least attempting to guarantee, a quality of service in a data network. When an IP-packet arrives at a Differentiated Service network it is classified by a first network router. The differentiate Service uses the Type of service field of the IP-header and classified the packet by using a Differentiated Service code point (DSCP). The classification may later be used by subsequent routers to determine how to prioritize the data traffic.

In the RNC, a separate queue that may be virtual, is defined for each delay class on a per-bearer basis. In some embodiment, these queues may be dynamically created or destroyed as packets marked with various delay classes arrive at the RNC. That is, a queue for a particular delay class may be created on demand when the first packet of that delay class arrives on the bearer. The queue can be destroyed when it becomes empty, or when it has remained empty for a defined period of time. A scheduling mechanism and, optionally, an Active Queue Management mechanism may be introduced for the RNC.

Along with the separate virtual queues, the RNC also instructs the Node B to set up a separate queue. This may be done, for example, either by introducing a specific new Node B Application Part message, or by setting a different Logical Channel ID and letting the Node B set up the required queue on demand. Note that after setting up the new queue, Packet Data Units (PDUs) belonging to separate queues can be identified by different Logical Channel IDs. The first option allows virtual bearers to be set up with different parameters, but introduces extra delay due to the NBAP signaling. The second option requires virtual bearer parameters to be set up in advance for the different Logical Channel IDs, but does not introduce extra delay due to NBAP signaling. There are fifteen possible different Logical Channels, which should be sufficient to map different requirements.

The Node B services queues according to packet transmission delay. For example, the Node B may service low-delay queues first. However, care should be taken not to fully empty the low-delay queues either. Based on the length of different queues, the Flow Control algorithm in the Node B can judge how much data is needed for each queue to get optimal performance. Based on such decisions, new fields can be introduced to a certain control frame denoted the CAPACITY ALLOCATION control frame as defined in 3GPP Technical Specification 25.435 V9.2.0 (2010-06), defining a lower limit to the number of PDUs that can be sent on different Logical Channels.

In High Speed Downlink Packet Access (HSDPA), a High Speed- Downlink Shared Channel (HS-DSCH) Frame Protocol provides a flow control mechanism that utilizes two control messages on the Iub interface, i.e. the interface between the Node B and the MT.

The first control message is the HS-DSCH CAPACITY REQUEST message that is sent from the RNC to the Node B in order to request HS-DSCH capacity from the Node B. The second is the HS-DSCH CAPACITY ALLOCATION message that is sent from the Node B to the RNC to control user-data flow from the RNC to the Node B. This message may be sent at any time.

The Node B uses a Credit Information Element (IE) to indicate the number of MAC-d Packet Data Units (PDUs) that the RNC may transmit during one HS-DSCH interval. If the HS-DSCH Credit IE has a value of zero (0), it signifies there are no resources in the Node B allocated for transmission, so the RNC should stop the flow. Varying values of the HS-DSCH Credit IE indicate varying capacities up to a maximum value of 2,047, which indicates unlimited capacity for the transmission of PDUs.

Figure 2 is presents fields of a control frame, and in more particular it presents the fields of the CAPACITY ALLOCATION control frame 20 as modified according to some embodiments of the present disclosure.

In addition to the original fields of the control frame, different HS-DSCH Credit values are indicated for different logical channels.

The number of PDUs that is assigned to Logical Channel i is HS-DSCH Credit i. Each HS-DSCH Credit i value must be smaller than the HS-DSCH Credit value, as found in a top or main part of the control frame.

The credit limit for each logical channel may be applied directly or hierarchically.

The choice how to apply the credit limits may be signaled or configured.

If the credit limit is directly applied, no more than HS-DSCH Credit PDUs can be sent for the entire flow, and no more than HS-DSCH Credit *i* PDUs for Logical Channel *i.*

If the credit limit is hierarchically applied, a decrease in the credits on channel i, also decreases the credits on channel i+1.

As mentioned above, the HS-DSCH Credit value limits the total number of PDUs that can be sent on the bearers.

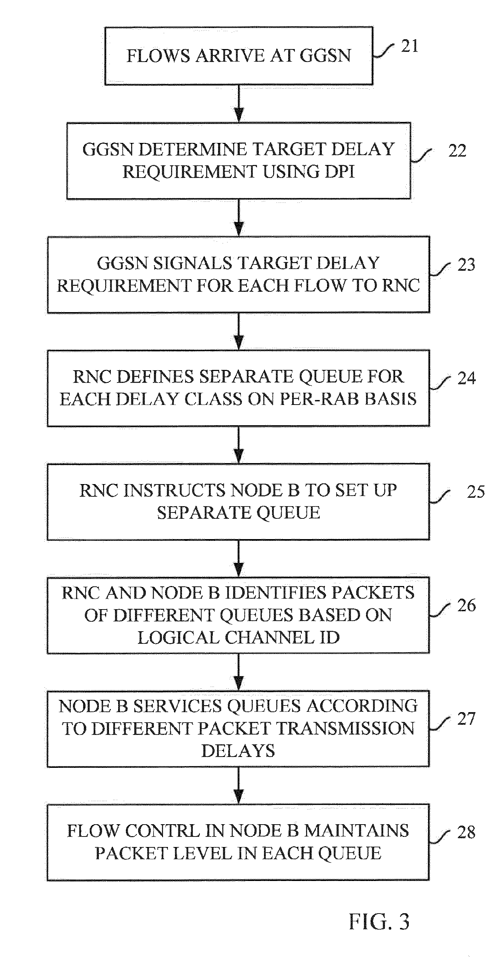

FIG. 3 is a flow chart illustrating a method related to embodiments of the present disclosure. At 21, new flows for a mobile terminal arrive at a core network node such as the GGSN 12 that may have a DPI module 11 installed. At 22, the GGSN uses DPI to examine the new flows arrived and determine the target delay requirement for each individual flow. At 23, the GGSN 12 may signal the target delay requirement for each flow to the RNC 16. At 24, the RNC defines a separate queue for each delay class on a per-Radio Access Bearer (RAB) basis. At 25, the RNC may instruct the Node B 17 to set up separate queues for each delay class on a per-RAB basis. At 26, the RNC 16 and Node B 17 identify packets belonging to separate queues by detecting different Logical Channel IDs. At 27, the Node B services queues according to the different packet transmission delays. At 28, the Flow Control algorithm in the Node B 17 may maintain a packet queue length for each queue to optimize transmission performance.

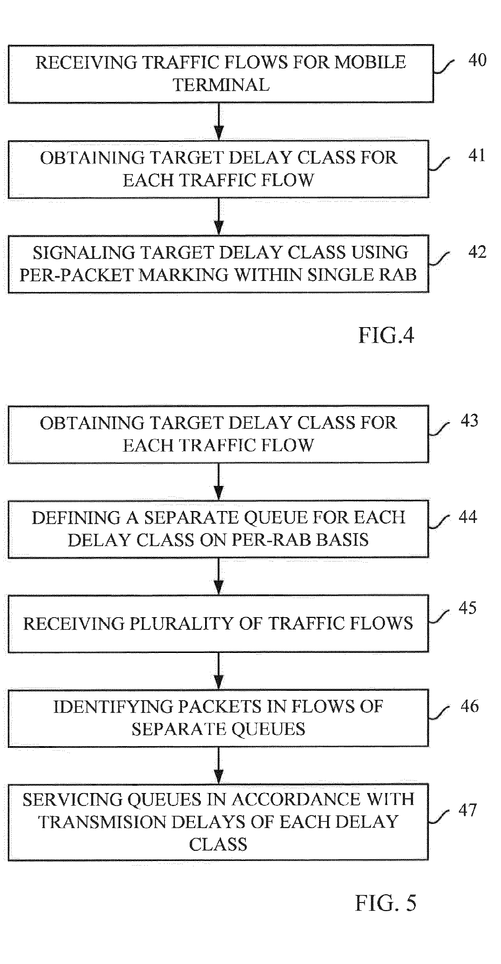

Fig. 4 presents a flowchart of a method in a core network for dynamically controlling throughput over an air interface between a mobile terminal 18 and a radio telecommunication system, wherein the radio telecommunication system comprises a radio access network and a core network. At 40, the core network node receives traffic flows for mobile terminals. At 41, obtaining a target delay class fro each traffic flow is performed. At 42 the network node signals each target delay class using per-packet marking within single Radio Access Bearer (RAB).

With reference to fig. 5, presenting a flowchart of a method in an access network for dynamically controlling throughput over an air interface between a mobile terminal 18 and a radio telecommunication system, wherein the radio telecommunication system comprises a radio access network and a core network. At 43 the flowchart comprises obtaining target delay class for each traffic flow. At 44 defining separate queues for each delay class on a per-RAB basis is performed. At 45 the access network node receives a plurality of traffic flows. At 46, the access network node identifies packets in flows of separate queues.

Fig. 6 schematically illustrates a block diagram of some embodiments of the present disclosure. It is illustrated a GGSN 12, a SGSN 14, an RNC 16, a Node B 17, and a Mobile Terminal (MT) 18.

New data flows for the MT 18 arrive at the GGSN 12. The GGSN may use a DPI module 11 to examine the new flows and determine the target delay requirement for each individual flow. Via the SGSN 14 the GGSN 12 may signal the target delay requirements for each of the flows to the RNC.

Alternatively, a DPI module 11 may be located with the Gi interface 13 between the Packet Data Network (PDN) 19 and a GGSN. According to this alternative, the DPI module may then examine the new flows and determine the target delay requirement for each individual flow of the new flows. Information gained from the examination is then forwarded to GGSN.

In any case, the GGSN 12 routes the Packet Data Units (PDUs) of the flows to the RNC 16. The RNC defines a separate queue 31, which may be virtual, for each delay class on a per-RAB basis. This means that each Radio Access Bearer may have one queue for each delay class.

The RNC comprises a Logical Channel ID detector 34 that identifies packets belonging to each one of the separate queues by detecting different Logical Channel IDs.

A Node B Instruction module 32 of the RNC 16 also instructs the Node B 17 to set up separate queues 33 for each delay class on a per-RAB basis.

The PDUs are forwarded by a Queue Servicing Unit 35 in the RNC 16 to the correct Node B 17. Also the Node B 17 comprises a Logical Channel ID detector 36 that may identify packets belonging to separate queues by detecting different Logical Channel IDs. A Queue Servicing Unit 37 in the Node B 17 forwards the PDUs to the correct MT 18. It is the Queue Servicing Unit 37 in the Node B 17 that services the different queues according to the determined different packet transmission delays.

The Flow Control algorithm of Node B 17 may then maintain a packet queue level in each queue to optimize transmission performance.

As presented in figure 6, the Node B 17 also comprises a Capacity Allocation module 38. The Capacity Allocation module 38 may generate the CAPACITY ALLOCATION message 20 as disclosed in figure 2. The CAPACITY ALLOCATION message 20 may be sent from the Node B 17 to the RNC 16 to provide feedback and enable control of user-data flow from the RNC 16 to the Node B 17.

The present disclosure comprises a number of advantages of which some are included below.

Embodiments of the present disclosure improve the performance of the Uu interface between the Mobile Terminal and the Node B, by providing improved delay and throughput performance without requiring additional bearer signaling or MT involvement.

Embodiments of the present disclosure support mixes of delay-sensitive and throughput-oriented traffic efficiently even while maintaining using a single radio Access Bearer.

It is advantages that the embodiments of the present disclosure do not require any changes to industry standards, and may readily be introduced to the existing Flow Control infrastructure.

It is made clear that presented embodiments may well be combined forming new embodiments not explicitly described herein.

In the claims, the term "comprises/comprising" does not exclude the presence of other elements or steps. Additionally, although individual features may be included in separate claims, these may be combined, and the inclusion in different claims does not imply that a combination of features is not feasible and/or advantageous. In addition, singular references do not exclude a plurality. The terms "a", "an", "first", "second" etc do not preclude a plurality. Reference signs in the claims are provided merely as a clarifying example and shall not be construed as limiting the scope of the claims in any way.

Although this disclosure has been described above with reference to (a) specific embodiment(s), it is not intended to be limited to the specific form set forth herein. The innovative concepts described in the present disclosure may be modified and varied over a wide range of applications.

This disclosure is limited only by the following claims and, other embodiments than the specific above are equally possible within the scope of said following claims.

## Claims

1. A core network node (12) for dynamically controlling throughput over an air interface between a mobile terminal and a radio telecommunication system, wherein the radio telecommunication system comprises a radio access network and a core network, the node comprising:
- means for receiving a plurality of traffic flows for the mobile terminal;
- means for obtaining from a packet inspection module, a target delay class for each traffic flow for the mobile terminal; and
- communication means for signaling the target delay class of each traffic flow to a Radio Network Controller, RNC, in the radio access network utilizing per-packet marking within a single Radio Access Bearer, RAB

2. The core network node (12) according to claim 1, wherein the core network node is a Gateway, General Packet Radio Service, GPRS, Serving Node, GGSN, and the packet inspection module is a Deep Packet Inspection, DPI, module (11) co-located with said core network node.

3. The core network node (12) according to claim 1, wherein the core network node is a GGSN and the means for obtaining a target delay class for each traffic flow comprises means for interfacing with a DPI engine implemented as an entity on a Gi interface between the GGSN and a packet data network.

4. The core network node (12) according to any of claims 1-3, wherein the communication means comprises means for indicating a delay class in a header field of the packets in each traffic flow, wherein the header field is selected from a group consisting of:
- a Differentiated Service Code Point, DSCP, field;
- an Internet Protocol version 6, IPv6, field;
- a new shim header inserted before each packet;
- a newly defined GPRS, Tunneling Protocol, GTP, extension field;
- an overloaded existing GTP field; and
- any other unused field of the packet header.

5. A computer-controlled method in a core network node (12) of dynamically controlling throughput over an air interface between a mobile terminal (18) and a radio telecommunication system, wherein the radio telecommunication system comprises a radio access network and a core network, the method comprising:
- receiving (40) a plurality of traffic flows for the mobile terminal;
- obtaining (41) a target delay class for each traffic flow for the mobile terminal; and
- signaling (42) the target delay class of each traffic flow to a Radio Network Controller, RNC, utilizing per-packet marking within a single RAB

6. An access network node (16) for dynamically controlling throughput over an air interface between a mobile terminal (18) and a radio telecommunication system, wherein the radio telecommunication system comprises a radio access network and a core network, the node comprising:
- means for obtaining a target delay class for each of a plurality of traffic flows for the mobile terminal;
- means for defining a separate, virtual queue for each delay class on a per-RAB basis;
- means for receiving from the core network, the plurality of traffic flows;
- means for identifying (34) packets in the flows belonging to separate queues utilizing Logical Channel IDs for each delay class; and
- means for servicing (35) the queues in accordance with transmission delays associated with each delay class.

7. The access network node (16) according to claim 6, wherein the means for obtaining a target delay class for each of a plurality of traffic flows comprises means for receiving packets from the core network, wherein the target delay class of each traffic flow is indicated in a header field of the packets, and the header field is selected from a group comprising:
- a DSCP field;
- an IPv6 field;
- a new shim header inserted before each packet;
- a newly defined GTP extension field;
- an overloaded existing GTP field; and
- any other unused field of the packet header.

8. The access network node (16) according to claim 6 or 7, wherein the means for obtaining a target delay class for each traffic flow comprises a DPI module co-located with the access network node.

9. The access network node (16) according to any of claims 6-8, wherein the access network node is a RNC (16), the RNC instructing a Node B (17) serving the mobile terminal (18) to set up a separate, virtual queue in the Node B for each delay class on a per-RAB basis.

10. The access network node (16) according to claim 9, wherein the RNC (16) instructing the Node B (17) comprises sending an instruction to the Node B in a new Node B Application Part message.

11. The access network node (16) according to claim 9 or 10, wherein the RNC (16) instructing the Node B (17) comprises:
- setting up virtual bearer parameters in the Node B in advance for different Logical Channel IDs; and
- setting a different Logical Channel ID for each delay class; whereupon the Node B sets up the required queues on demand.

12. The access network node (16) according to claim 11, wherein the RNC (16) and Node B (17) identifying packets belonging to separate queues utilizing the Logical Channel IDs.

13. The access network node (16) according to claim 12, wherein the Node B (17) servicing the queues according to packet transmission delays associated with each queue, wherein a flow control mechanism in the Node B sets a packet queue length for each queue to optimize transmission performance.

14. A computer-controlled method in an access network node (16) of dynamically controlling throughput over an air interface between a mobile terminal and a radio telecommunication system, wherein the radio telecommunication system comprises a radio access network and a core network, the method comprising:
- obtaining (43) a target delay class for each of a plurality of traffic flows for the mobile terminal;
- defining (44) a separate, virtual queue for each delay class on a per-RAB basis;
- receiving (45) from the core network, the plurality of traffic flows;
- identifying (46) packets in the flows belonging to separate queues utilizing Logical Channel IDs for each delay class; and
- servicing (47) the queues in accordance with transmission delays associated with each delay class.

15. The computer-controlled method according to claim 14, wherein the obtaining (43) a target delay class for each of a plurality of traffic flows comprises obtaining from performing DPI within the access network node indicating of a delay class by utilizing a node-internal encapsulation format.
